# EUROPEAN PATENT APPLICATION

(11) **EP 4 657 588 A1**
(43) Date of publication of application: **03.12.2025**
(21) Application number: 24305851.8
(22) Date of filing: 29.05.2024
(51) Int. Cl.: H01M 10/0567, H01M 10/36

(54) **ELECTROLYTE ADDITIVE FOR ZINC METAL BATTERIES**

(71) Applicant: Centre National de la Recherche Scientifique, 75016 Paris (FR); College de France, 75231 Paris Cedex 05 (FR); SORBONNE UNIVERSITE, 75006 Paris (FR)
(72) Inventor: AGUILAR, Ivette, 75014 Paris (FR); BROWN, John, 75010 Paris (FR); TARASCON, Jean-Marie, 75014 Paris (FR)
(74) Representative: Santarelli

(57) **Abstract**

An electrolyte composition for a Zinc metal electrochemical device said electrolyte composition comprising water, a zinc salt, and an additive of formula (I), its use and an electrochemical device comprising said electrolyte.

## Description

### Field of the invention

The invention relates to the field of Zinc Metal Batteries (ZMB) and more particularly to an electrolyte composition suitable for such battery.

### Background

The study of zinc batteries began early in the development of electrochemical devices, as they were used as the anode in Volta's pile in 1800 and Daniel's pile in 1836. Since, zinc metal, due to its high theoretical mass and volumetric capacity, as well as its relative abundance, has been extensively used as an anode material in a wide range of different zinc battery technologies, including, but not limited to, Zn-air, Zn-manganese, Zn-nickel, and Zn-silver oxide batteries.

Aqueous Zinc Metal Batteries (ZMBs) refers to rechargeable electrochemical energy storage devices that uses water-based electrolytes and zinc metal as the anode material. These batteries are sustainable, low-cost batteries with high safety, boasting impressive gravimetric (820 mAh g⁻¹) and volumetric capacity (5,855 mAh cm⁻³) with a low electrode potential (-0.76 V vs. SHE (Standard Hydrogen Electrode). However, poor cycling efficiency due to dendrite formation and side reactions like hydrogen evolution (HER) restricts their practical applications. Indeed, aqueous ZMB continue to struggle with a limited cycling lifespan and reduced coulombic efficiency (CE) due to dendrite formation on the zinc anode. These dendrites can penetrate the separator, causing internal shorting failures. Additionally, dendrite formation can decrease zinc utilization by facilitating corrosion and lead to inactive "dead zinc" through detachment.

An effective approach to mitigate dendrite growth is electrolyte engineering¹. Various electrolyte additives have been incorporated into Zn-based electrolytes to enhance the cycle life of ZMBs and these additives can be categorized into organic and inorganic compounds.

Organic additives like dichloromethane, acetonitrile, and succinonitrile modify solvation properties, inhibiting dendrite formation. Yet, they render the electrolyte flammable, compromising safety, a key parameter of aqueous batteries. Polyacrylamide offers similar effects but requires a high concentration, compromising electrolyte properties such as conductivity and Zn transference number. Indeed, while organic additives inhibit dendrites, they often reduce ionic conductivity which leads to polarization and hinders battery performance.

Inorganic additives, typically salts, can maintain or enhance ionic conductivity while preventing dendrite growth. These electrolytes usually involve adding large quantities of salts that surpass the solubility limit of Zn salts, thereby improving conductivity and Zn transference numbers. Examples such as potassium acetate (KAc) lithium bis(trifluoromethanesulfonyl)imide (LiTFSI), and sodium perchlorate (NaClO₄) have been employed for this purpose. While promising, these methods often require high salt concentrations and introduce additional cations beyond Zn²⁺, complicating electrochemical performance. Moreover, TFSI⁻ and ClO₄⁻ salts pose corrosion and toxicity risks, conflicting with the green ethos of aqueous electrolytes.

Therefore, there is still a need to provide an aqueous electrolyte for Zn-Metal battery that overcome the problems above-mentioned.

The inventors has developed a new electrolyte composition for ZMB, comprising a specific additive, said electrolyte being able to reduce dendrite growth while preserving electrolyte properties, without resorting to high salt concentrations or introducing other cations.

### Description of the invention

The first object of the present invention is an electrolyte composition for a zinc metal electrochemical device, said electrolyte composition comprising a zinc salt, water and an additive of formula (I): 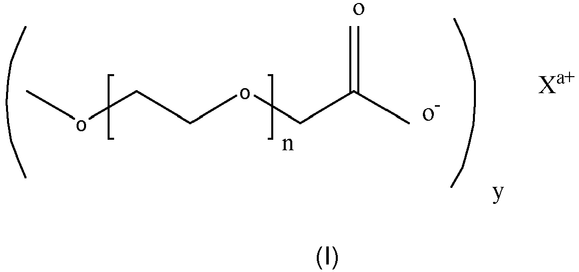 wherein:
- n is comprised between 1 to 8,
- X is H with a being equal to 1, or X is a metal with a being equal to 1 or 2,
- y is equal to a.

Advantageously, X is a metal selected from Zn, Mg, K, Na, Ca, Al and Li. Preferably, X is Zn or Li, more preferably X is Zn.

Advantageously, n is comprised between 1 and 3. Preferably, n is equal to 3.

Advantageously, a and y are equal to 2.

Advantageously, the additive of formula (I) is a zinc oligoether.

Advantageously, the additive of formula (I) is selected from zinc(2-methoxyethylcarbonate)₂ (Zn(MEC)₂), zinc(2-(2-methoxyethoxy)acetate)₂ (Zn(MEA)₂), zinc(2-[2-(2-methoxyethoxy)ethoxy]acetate)₂ (Zn(MEEA)₂), and mixtures thereof. Preferably, the additive of formula (I) is zinc(2-[2-(2-methoxyethoxy)ethoxy]acetate)₂ (Zn(MEEA)₂).

Advantageously, the amount of the additive of formula (I) is comprised between 1 wt% and 50 wt%, preferably between 1 wt% and 35 wt%, more preferably between 2 wt% and 20 wt%, even more preferably between 2.5wt% and 10wt% with respect to the total weight of the electrolyte composition.

It will be noted that in the context of the present application, and unless otherwise stipulated, the ranges of values indicated are understood to be inclusive.

Advantageously, the electrolyte composition is an aqueous electrolyte composition which can be used in a Zinc Metal electrochemical devices (i.e. electrochemical device comprising zinc metal as negative electrode) such as a cell or a battery (stack of cells).

The electrolyte composition is preferably in a liquid or semi liquid state (i.e., viscous state).

The electrolyte composition of the invention is an aqueous electrolyte, which means that water is used as solvent.

Advantageously, the concentration of water in the electrolyte composition is higher than 24M, preferably is comprised between 24M and 50M, more preferably between 26M and 35M.

As above-mentioned, the electrolyte composition of the invention comprises a zinc salt.

Advantageously, the zinc salt is selected from zinc sulfate (ZnSO₄), zinc perchlorate (Zn(ClO₄)₂), zinc chloride (ZnCl₂) and zinc nitrate (Zn(NO₃)₂). Preferably, the zinc salt is zinc sulfate.

The zinc salt is advantageously, in part or wholly in a dissolved state.

As it will be directly understood, the working temperature of the electrolyte must be considered when selecting the concentration of the additives or any other components of the electrolyte composition. Unless otherwise stated, the electrolyte working temperature ranges from -30°C to 70°C. According to a preferred embodiment, the working range of temperature is -25°C to 60°C, more preferably 5°C to 55°C, even more preferably at room temperature.

Advantageously, the concentration of zinc salt in the electrolyte composition is comprised between 0.1M and 20M, preferably between 0.5M and 15M, more preferably between 1M and 5M.

According to one embodiment, the electrolyte composition can comprises additives other than the additive of formula (I) and/or components usually present in an electrolyte.

Advantageously, the electrolyte composition further comprises organic additives selected from, amide-containing compounds such as urea, methylurea and polyacrylamide, and co-salts such as potassium acetate (KAc), lithium bis(trifluoromethanesulfonyl)imide (LiTFSI), sodium perchlorate (NaClO₄) and guanidinium sulphate (Gdm₂SO₄).

Preferably, the organic additive is urea or guanidinium sulphate.

A further object of the invention relates to a process for preparing the electrolyte composition as above-defined, said process comprising the following steps:
a) Providing the additive of formula (I)
b) Providing a zinc solution by mixing zinc salt with water
c) Adding the additive of formula (I) in the zinc solution.

The electrolyte composition of the present invention is particularly suited to be used in an electrochemical device such as a Zinc metal cell and/or battery.

Thus, a further object of the invention is an electrochemical device comprising the electrolyte composition as previously defined.

Advantageously, the electrochemical device is a battery.
A battery is composed of one or more electrochemical cells. In particular, the electrolyte composition of the invention is adapted to be used for the manufacture of rechargeable battery, storage battery, or secondary cell of this type which can be charged, discharged into a load, and recharged many times. The electrolyte composition according to the invention can be used in small volume (e.g., no more than 16µl per mg) and therefore the size of the battery according to the invention is reduced.

A further object of the invention is an electrochemical cell comprising an anode, a cathode, and an electrolyte, wherein said anode comprises an anode active material comprising zinc metal, wherein said cathode comprises a cathode active material and wherein said electrolyte is as previously defined.

The cathode active material can be used alone or in combination with a conductive additive such as carbon black.

Advantageously, the cathode active material is selected from an inorganic materials, an organic redox-material, a metal oxide-based material or a mixture thereof.

Advantageously, the inorganic material is metal hexacyanoferrates such as iron(III) hexacyanoferrate(II) known as Prussian blue.

Advantageously, the metal-oxide-based is selected from vanadium oxide, nickel oxide and manganese oxide.

Advantageously, the organic redox-active materials is selected from p-type organic molecules such as polyaniline and polypyrole, n-type organic molecules such as carbonyl compounds, and bipolar type organic molecules such as indanthrone. The carbonyl compounds can be selected from quinones, carboxylates, anhydrides, imides, and ketones.

Preferably, the cathode active material is manganese oxide

A separator is generally inserted between an anode and cathode to prevent any short circuiting. The separator material can be selected from among the following materials: glass fiber, a polyolefin e.g. polypropylene PP, polyethylene PE, polyester and fluoropolymer-based e.g. polytetrafluoroethylene (PTFE), polyvinylidene fluoride (PVDF).

The separator is advantageously made of glass fibre and preferably glass microfibers.

Glass microfibers refer to fibers of glass having a diameter of less than 10 µm.

For example, a Whatman glass microfibre separator of grade D (1.27cm in diameter), of garde (pore size 1.7 µm) or of grade C (pore size 1.2 µm) can be used.

The diameter will depend on the cell used, the skilled person will be able to select the optimal separator depending on the required properties.

Advantageously, glass fibre separator can be combined to a second separator. Preferably, said second separator can be made with polyolefin e.g. polypropylene PP, polyethylene PE, polyester or fluoropolymer-based e.g. Polytetrafluoroethylene (PTFE) and Polyvinylidene fluoride (PVDF). For example separator sold by Celgrad or Bellcore (made with PVDF-HFP copolymer resin, a plasticizer (dibutyl phthalate), and nano filler (SiO2)..

The current collector can be made of any suitable material. It is preferred to avoid the use of aluminium or copper. Advantageously, the current collector is made with titanium, stainless steel or glassy carbon.

A further objet of the invention relates to the use of the electrolyte composition as previously defined or of the electrochemical cell as above-defined in any one of claims, for the manufacture of an electrochemical device.

Advantageously, the electrochemical device is a rechargeable battery.

Advantageously, the rechargeable battery is a zinc metal battery.

A further objet of the invention relates to the use of the compound of formula (I) 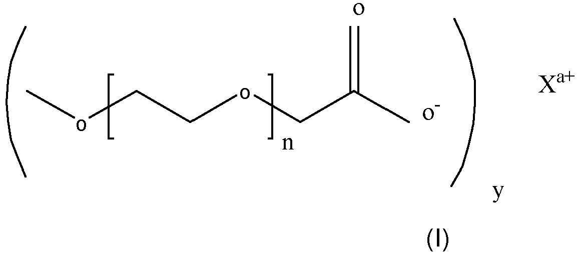 wherein:
- n is comprised between 1 to 8,
- X is H with a being equal to 1, or X is a metal with a being equal to 1 or 2,
- y is equal to a.
as an additive in an electrolyte composition for reducing dendrite growth in a zinc metal electrochemical device, said electrolyte composition comprising a zinc salt and water.

A yet further objet of the invention is the use of the compound of formula (I) 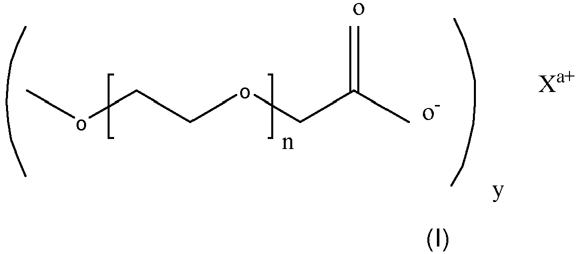 wherein:
- n is comprised between 1 to 8,
- X is Zn and a being equal to 2,
- y is equal to a,
as a primary salt in an electrolyte composition of a zinc metal electrochemical device, said electrolyte composition comprising water.

By "primary salt" it is meant a compound that dissociates to provide the necessary ions for the conduction of electricity within an electrolyte solution.

Advantageously, the compound of formula (I) used as a primary salt is a zinc oligoether.

Advantageously, the compound of formula (I) used as a primary salt is selected from zinc(2-methoxyethylcarbonate)₂ (Zn(MEC)₂), zinc(2-(2-methoxyethoxy)acetate)₂ (Zn(MEA)₂), zinc(2-[2-(2-methoxyethoxy)ethoxy]acetate)₂ (Zn(MEEA)₂), and mixtures thereof. Preferably, the compound of formula (I) is zinc(2-[2-(2-methoxyethoxy)ethoxy]acetate)₂ (Zn(MEEA)₂).

The inventors have demonstrated that the electrolyte composition according to the invention leads to the following advantages:
- Decreases significantly dendrite growth on the anode (zinc electrode), and therefore avoiding short-circuit in the battery. Indeed, the electrolyte composition of the invention has the ability to alter the solvation structure of Zn²⁺ complexes, thus reducing the uneven electrodeposition of zinc.
- Avoids saturating the electrolyte with salts that are often non-Zn-based
- Presents good cycling performance even at high rate or at high temperature.

Other features and advantages of the invention will become apparent from the following examples, given by way of illustration, with reference to the following figures.

### Brief description of the figures

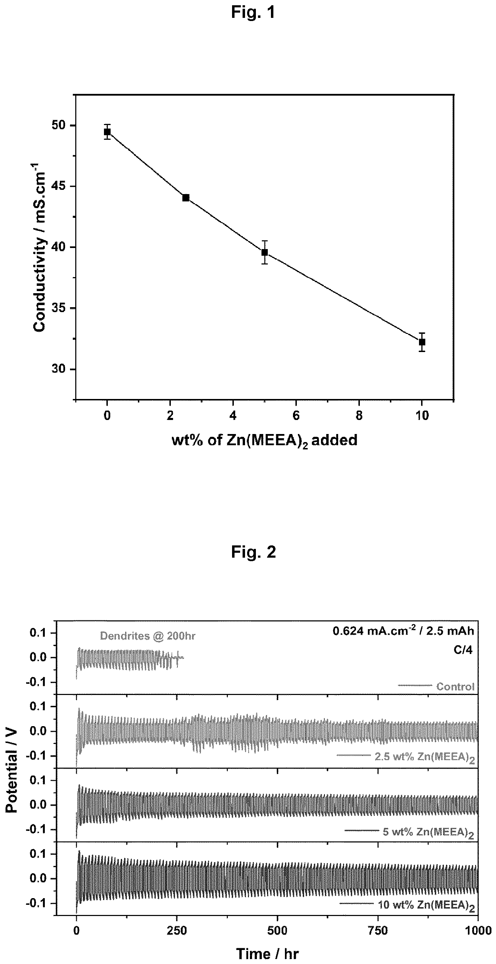

- **Figure 1**: shows conductivity of electrolyte composition according to the invention comprising. Said electrolyte comprising 2.5wt%, 5wt% or 10wt% of Zn(MEEA)₂ in 2M ZnSO4(aq)
- **Figure 2**: shows galvanostactic voltage profiles of Zn symmetric cells at 0.624 mA cm⁻² at 2.5 mAh for an electrolyte without additive comprising 2M of ZnSO₄ (Control), and electrolyte compositions according to the invention comprising also 2M of ZnSO₄ with different amount of additive (2.5wt%, 5wt% or 10wt% of Zn(MEEA)₂)

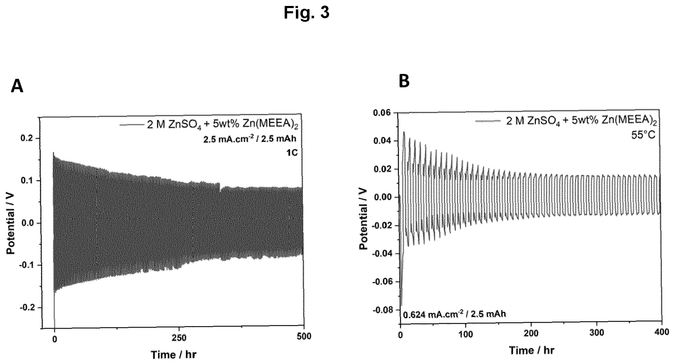

- **Figure 3**: A) Galvanostatic voltage profiles of Zn symmetric cells at 2.5 mA cm⁻² at 2.5 mAh for an electrolyte composition according to the invention comprising 2 M ZnSO₄ + 5 wt% Zn(MEEA)₂ B) Galvanostatic voltage profiles of Zn symmetric cells at 0.624 mA cm⁻² at 2.5 mAh for the same electrolyte composition as A) but at 55°C

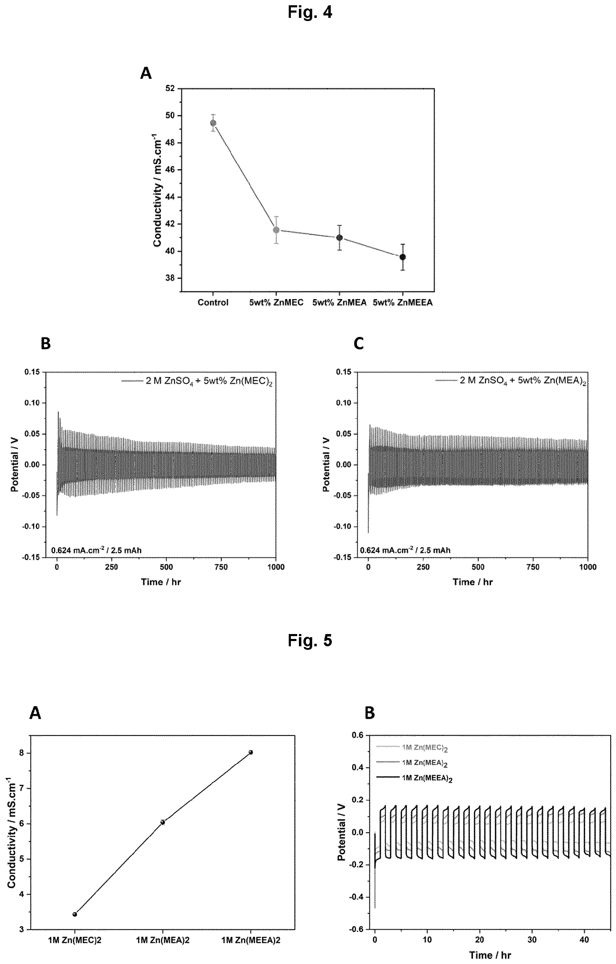

- **Figure 4**: A) Conductivity of electrolytes according to the invention containing 5 wt% of Zn(MEC)₂, or Zn(MEA)₂ or Zn(MEEA)₂ in 2M ZnSO₄(aq). B) Galvanostatic voltage profiles of Zn symmetric cells at 0.624 mA cm⁻² at 2.5 mAh for an electrolyte composition according to the invention comprising 2 M ZnSO₄ + 5 wt% Zn(MEC)₂ C) Galvanostatic voltage profiles of Zn symmetric cells at 0.624 mA cm⁻² at 2.5 mAh for an electrolyte composition according to the invention comprising 2 M ZnSO₄ + 5 wt% Zn(MEA)₂
- **Figure 5**: A) Conductivity of electrolytes according to the invention containing 1M of Zn(MEC)₂, or Zn(MEA)₂ or Zn(MEEA)₂ in water. B) Galvanostatic voltage profiles of Zn symmetric cells at 2.5 mA cm⁻² at 2.5 mAh for an electrolyte composition according to the invention comprising 1M Zn(MEC)₂, Zn(MEA)₂ and Zn(MEEA)₂.

### Example 1: preparation of the compound of formula (I) ((Zn(MEA)₂)

Zn(MEA)₂ was prepared by dissolving 2-[2-(2-methoxyethoxy)ethoxy]acetic acid in water to which Zn₅(CO₃)₂(OH)₆ was added until the pH of the solution reached 7. The resulting solution was distilled under vacuum to obtain the Zinc(2-(2-methoxyethoxy)acetate)₂.

### Example 2: preparation of the compound of formula (I) (Zn(MEC)₂)

Zn(MEC)₂ was prepared by dissolving 2-(2-methoxyethoxy)acetic acid in water to which Zn₅(CO₃)₂(OH)₆ was added until the pH of the solution reached 7. The resulting solution was distilled under vacuum to obtain the Zinc (2-methoxyethyl carbonate)₂

### Example 3: preparation of the compound of formula (I) (Zn(MEEA)2)

Zn(MEEA)₂ was prepared through adaptation of methods described by Kunz et al. ¹⁰ Whereby, 2-[2-(2-methoxyethoxy)ethoxy]acetic acid (MEEA) is prepared in a Ar-filled glovebox by dissolving lithium metal (0.132 mol) in excess TEGME (2-(2-(2-Méthoxyéthoxy)éthoxy)ethanol) (50 mL), after which chloroacetic acid (0.067 mol) dissolved in TEGME (10mL) is added dropwise into the solution and is reacted for 16 hours. Excess TEGME is removed via distillation after which the solution is treated with an aqueous solution of orthophosphoric acid (0.098 mol). Dichloromethane (DMC) was added to the solution resulting in two phases. The aqueous phase was washed further with DMC and the organic phases were combined and dried using magnesium sulphate. This solution is then distilled under vacuum to yield the 2-[2-(2-methoxyethoxy)ethoxy]acetic acid. The Zn(MEEA)₂ was prepared via cation exchange reaction in water using Zinc carbonate basic (Zn₅(CO₃)₂(OH)₆). 2-[2-(2-methoxyethoxy)ethoxy]acetic acid was dissolved in water to which Zn₅(CO₃)₂(OH)₆ was added until the pH of the solution reached 7. The resulting solution was distilled under vacuum to yield the Zinc (2-[2-(2-methoxyethoxy)ethoxy]acetate)2.

### Example 4: preparation of the Electrolyte according to the invention

2 M ZnSO4 was prepared by dissolving ZnSO₄ salt into Milli-Q ultrapure water. The mixtures were stirred for 5 minutes. The desired amount of the additive of formula (I) 2.5wt%, 5wt% or 10wt%, was added to a 2 M ZnSO₄ blank electrolyte and the solution was vortexed for 1 min.

For electrolytes using the compound of formula (I) as a primary salt, 1 M of Zn(MEC)₂, Zn(MEA)₂ and Zn(MEEA)₂ was dissolved into Milli-Q ultrapure water.

### Example 5: Battery assembly

For all the electrochemical tests, a PFA Hardware Swagelok cell was used in a two-electrode configuration. Zn symmetric cells were assembled with two zinc metal electrodes (Zn disk 1 cm Ø) which were untreated before use. Two Whatman glass fiber separators (GF/D, 1.27 cm Ø) were added between the two electrodes along with 300 µL of electrolyte, carefully incorporated using a micropipette. The Swagelok cells were sealed with parafilm^{©} to ensure a tight seal. The cycling rate of the cells were 0.624 and 2.5 mA with a capacity of 2.5 mAh, which corelates to C/4 and 1C.

### Comments

Figure 1 showcases the conductivity of the electrolytes containing no additive (control) or 2.5wt%, 5wt% and 10wt% of the additive Zn(MEEA)₂ . The results show that the conductivity decreases slightly without impacting the performance of the electrolyte. Symmetric Zn II Zn cells are commonly employed to determine the onset of dendrite growth and thus the performance of an electrolyte for ZMBs.

Figure 2 shows that the control electrolyte, cycled at 0.624 mA with a capacity of 2.5 mAh (C/4) at room temperature, lasted 200 hours before the presence of dendrites occurred, indicated by a drastic change to the cycling. Meanwhile, the electrolytes containing 2.5wt%, 5wt% and 10wt% of Zn(MEEA)₂ have reached well over 1000 hours of cycling under the same cycling conditions without any presence of dendrites forming.

It is to be noted that cycling between hours 250 - 450 for the 2.5 wt% Zn(MEEA)₂ cell showcase an increase in polarization which the result of temperature changes within the room. This had no clear impact on the cell as once the temperature stabilized, the cycling returned to normal.

Therefore, these results demonstrate that thanks to the additive of formula (I) in the electrolyte composition, formation of Zn metal dendrite is preventing.

The properties of the electrolyte composition according to the invention has been tested under extreme conditions. Figure 3A) demonstrates that at higher rates (2.5 mA with a capacity of 2.5 mAh = 1C), the cells comprising the additive of the invention present a good cycling capability over 500 hours showing that the cells are able to function even at a high rate. Figure 3B) shows also good cycling capability at 55°C over 400 hours, demonstrating that the cells according to the invention are able to function at elevated temperatures.

Figure 4A) shows that a similar conductivity is obtained with 5wt% of Zn(MEC)₂ Zn(MEA)₂ and Zn(MEEA)₂. In addition, figure 4B) and C) shows that the cells comprising either Zn(MEC)₂ or Zn(MEA)₂ reached 1000 hours of cycling under the same conditions of the control electrolyte.

Thus, an electrolyte comprising Zn(MEC)₂ or Zn(MEA)₂ is also capable of preventing the formation of dendrite

Therefore, it follows from Figure 4 that it is high likely that all the results obtained with Zn(MEEA)₂ would also be obtained with Zn(MEC)₂ or Zn(MEA)₂ and more broadly with all the compound falling in the formula of the additive of formula (I) according to the invention.

Figure 5 showcases the ionic conductivity for electrolytes containing 1 mol/l Zn(MEC)₂ Zn(MEA)₂ and Zn(MEEA)₂ which decreases from 8 to 3.5 mS.cm⁻¹, which is due to the high molar mass and large size of the different salts. Despite the lower conductivity compared to the 2M ZnSO₄-based electrolytes, the above electrolytes are able to cycle in a Zn symmetric cell, indicating that the compound of formula (I) could also be used as a primary salt.

## Claims

1. An electrolyte composition for a zinc metal electrochemical device, said electrolyte composition comprising a zinc salt, water and an additive of formula (I): 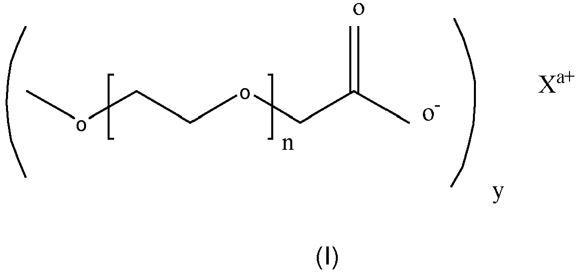 wherein:
- n is comprised between 1 to 8,
- X is H with a being equal to 1, or X is a metal with a being equal to 1 or 2,
- y is equal to a.

2. The electrolyte composition according to claim 1, wherein X is a metal selected from Zn, Mg, K, Na, Li, Ca and Al.

3. The electrolyte composition according to claim 2, wherein X is Zn.

4. The electrolyte composition according to any one of claims 1 to 3, wherein n is comprised between 1 to 3.

5. The electrolyte composition according to any one of claims 1 to 4, wherein a and y are equal to 2.

6. The electrolyte composition according to any one of claims 1 to 5, wherein the additive of formula (I) is selected from:
- zinc(2-methoxyethylcarbonate)₂ (Zn(MEC)₂),
- zinc(2-(2-methoxyethoxy)acetate)₂ (Zn(MEA)₂),
- zinc(2-[2-(2-methoxyethoxy]acetate)₂ (Zn(MEEA)₂), and
- mixtures thereof.

7. The electrolyte composition according to any one of claims 1 to 6, wherein the amount of the additive of formula (I) is comprised between 1wt% and 50wt%, with respect to the total weight of the electrolyte composition.

8. The electrolyte composition according to any one of claims 1 to 7, comprising at least 24 M of water.

9. The electrolyte composition according to any one of claims 1 to 8, wherein the concentration of the zinc salt in the electrolyte is comprised between 0.1M and 20M.

10. The electrolyte composition according to any one of claims 1 to 9, wherein the zinc salt is selected from zinc sulfate (ZnSO₄), zinc perchlorate (Zn(ClO₄)₂), zinc chloride (ZnCl₂) and zinc nitrate (Zn(NO₃)₂).

11. The electrolyte composition according to any one of claims 1 to 10, wherein the zinc salt is zinc sulfate.

12. An electrochemical cell comprising an anode, a cathode and an electrolyte, wherein the electrolyte is as defined in any one of claims 1 to 11.

13. The electrochemical cell according to claim 12, wherein the anode comprises an anode active material, wherein the anode active material is zinc metal.

14. The electrochemical cell according to claim 12 or 13, wherein the cathode comprises a cathode active material said cathode active material is selected from an inorganic materials, an organic redox-material and a metal oxide-based material.

15. Use of the electrolyte composition as defined in any one of claims 1 to 11 or of the electrochemical cell as defined in any one of claims 12 to 14, for the manufacture of an electrochemical device.

16. The use according to claim 15, wherein the electrochemical device is a rechargeable battery, preferably a zinc metal battery.

17. Use of the compound of formula (I) 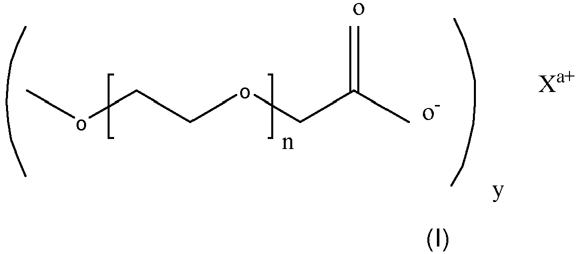 wherein:
- n is comprised between 1 to 8,
- X is H with a being equal to 1, or X is a metal with a being equal to 1 or 2,
- y is equal to a.
as an additive in an electrolyte composition for reducing dendrite growth in a zinc metal electrochemical device, said electrolyte composition comprising a zinc salt and water.

18. Use of the compound of formula (I) 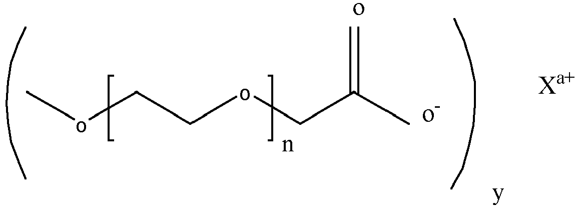 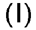 wherein:
- n is comprised between 1 to 8,
- X is H with a being equal to 1, or X is a metal with a being equal to 1 or 2,
- y is equal to a,
as a primary salt in an aqueous electrolyte composition of an electrochemical device.
